# EUROPEAN PATENT APPLICATION

(11) **EP 4 808 034 A1**
(43) Date of publication of application: **16.09.2026**
(21) Application number: 24908275.1
(22) Date of filing: 12.12.2024
(51) Int. Cl.: H04L 5/00, H04L 25/02, H04W 52/32, H04W 72/232, H04W 72/0453, H04L 1/00

(54) **ELECTRONIC DEVICE AND METHOD FOR SETTING UPLINK REFERENCE SIGNAL**

(30) Priority: 22.12.2023 KR 20230190539; 16.01.2024 KR 20240007069
(71) Applicant: Samsung Electronics Co., Ltd., Suwon-si, Gyeonggi-do 16677 (KR)
(72) Inventor: CHOI, Chanho, Suwon-si Gyeonggi-do 16677 (KR); SHIM, Seijoon, Suwon-si Gyeonggi-do 16677 (KR)
(74) Representative: Gulde & Partner
(86) International application number: PCT/KR2024/096869
(87) International publication number: WO 2025/135993

(57) **Abstract**

According to one embodiment, a method performed by a device of a base station may comprise an operation of determining a first frequency domain for reference signals in an extended frequency domain of frequency domain spectrum shaping (FDSS) on the basis of communication quality for a channel between the base station and a terminal. The method may comprise the operations of: transmitting, to the terminal, resource allocation information about a second frequency domain for data signals in the extended frequency domain; receiving, through the extended frequency domain, uplink signals that are configured on the basis of the FDSS and include the reference signals and data signals; performing channel estimation for the second frequency domain through the reference signal received through the first frequency domain; and acquiring the data signals on the basis of the results of the channel estimation for the second frequency domain.

## Description

### [Technical Field]

The present disclosure relates to an electronic device and a method for setting an uplink reference signal.

### [Background Art]

In order to obtain higher output power through a waveform having a low peak-to-average power ratio (PAPR), discrete Fourier transform spread orthogonal frequency division multiplexing (DFT-S-OFDM) is used for an uplink signal. Even when DFT-S-OFDM is used, PAPR may increase according to a modulation scheme.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, a device of a base station may comprise a transceiver, memory storing instructions, and a processor. The instructions, when executed by the processor, may cause the device to determine, based on communication quality of a channel between the base station and a terminal, a first frequency domain for reference signals among an extended frequency domain of frequency domain spectrum shaping (FDSS). The instructions, when executed by the processor, may cause the device to transmit resource allocation information related to a second frequency domain for data signals among the extended frequency domain to the terminal. The instructions, when executed by the processor, may cause the device to receive uplink signals configured based on the FDSS and comprising the reference signals and the data signals through the extended frequency domain. The instructions, when executed by the processor, may cause the device to perform a channel estimation for the second frequency domain through the reference signal received through the first frequency domain. The instructions, when executed by the processor, may cause the device to, based on a result of the channel estimation for the second frequency domain, obtain the data signals.

According to an embodiment, a method performed by a device of a base station may comprise determining, based on communication quality of a channel between the base station and a terminal, a first frequency domain for reference signals among an extended frequency domain of frequency domain spectrum shaping (FDSS). The method may comprise transmitting resource allocation information related to a second frequency domain for data signals among the extended frequency domain to the terminal. The method may comprise receiving uplink signals configured based on the FDSS and comprising the reference signals and the data signals through the extended frequency domain. The method may comprise performing a channel estimation for the second frequency domain through the reference signal received through the first frequency domain. The method may comprise, based on a result of the channel estimation for the second frequency domain, obtaining the data signals.

According to an embodiment, a non-transitory computer readable storage medium may store one or more programs. The one or more programs may comprise instructions, which, when executed by a processor of a device of a base station, cause the device to determine, based on communication quality of a channel between the base station and a terminal, a first frequency domain for reference signals among an extended frequency domain of frequency domain spectrum shaping (FDSS). The one or more programs may comprise instructions, which, when executed by the processor, cause the device to transmit resource allocation information related to a second frequency domain for data signals among the extended frequency domain to the terminal. The one or more programs may comprise instructions, which, when executed by the processor, cause the device to receive uplink signals configured based on the FDSS and comprising the reference signals and the data signals through the extended frequency domain. The one or more programs may comprise instructions, which, when executed by the processor, cause the device to perform a channel estimation for the second frequency domain through the reference signal received through the first frequency domain. The one or more programs may comprise instructions, which, when executed by the processor, cause the device to, based on a result of the channel estimation for the second frequency domain, obtain the data signals.

### [Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5 illustrates an example of a resource structure of a time-frequency domain supported by a wireless communication system.
FIG. 6 illustrates an example of channels in a communication standard.
FIG. 7 illustrates an example of an operation of a transmission device for performing discrete Fourier transform spread orthogonal frequency division multiplexing (DFT-S-OFDM) based on frequency-domain spectral shaping (FDSS).
FIGS. 8A and 8B illustrate graphs for representing reduction performance of a PAPR according to use of DFT-S-OFDM based on FDSS.
FIG. 9 illustrates an example of an operation of a reception device for receiving a signal configured through DFT-S-OFDM based on FDSS.
FIG. 10 illustrates an example of operations of a base station and a terminal for determining a frequency domain in which a reference signal is transmitted and power of the reference signal.
FIG. 11 illustrates an example of operations of a base station and a terminal for transmitting an uplink signal including a reference signal and a data signal.
FIGS. 12A, 12B, and 12C illustrate examples of a size of a first frequency domain.
FIG. 13 illustrates an example of an operation of a base station for determining a first frequency domain for reference signals.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a resource (e.g., a symbol, a slot, a subframe, a radio frame, a subcarrier, a resource element (RE), a resource block (RB), a bandwidth part (BWP), or an occasion), a term for an operation state (e.g., a step, an operation, or a procedure), a term referring to data (e.g., a packet, a user stream, information, a bit, a symbol, or a codeword), a term referring to a channel, a term referring to network entities, a term referring to a component of a device, and the like used in the following descriptions are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

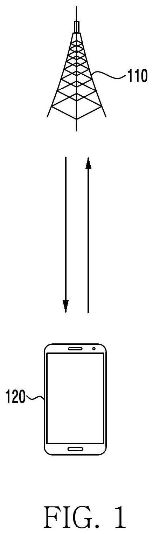

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

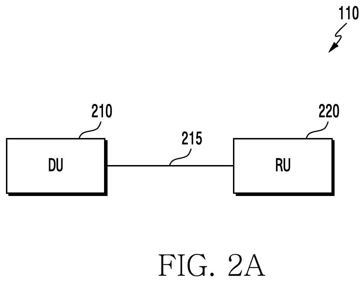

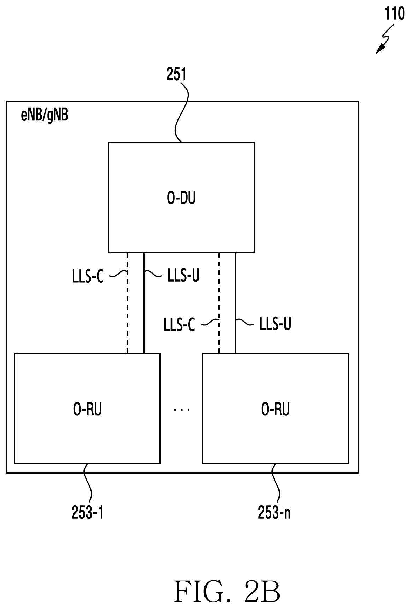

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

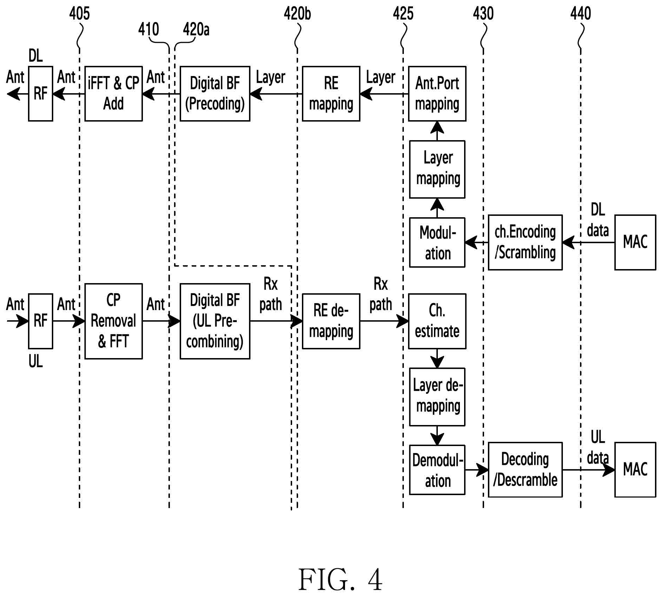

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, inverse fast Fourier transform (iFFT) conversion (or fast Fourier transform (FFT) conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

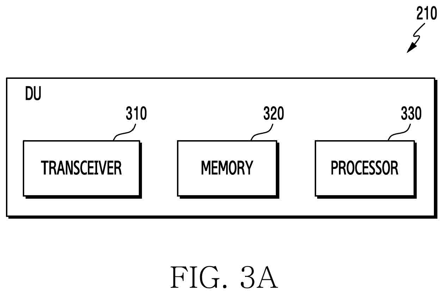

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

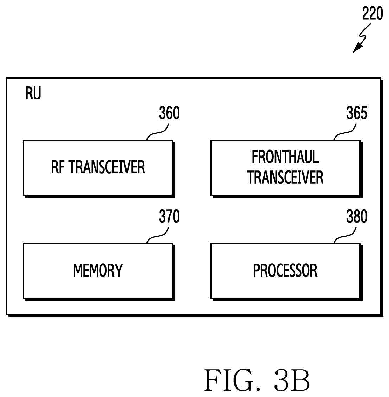

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using standard terms of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

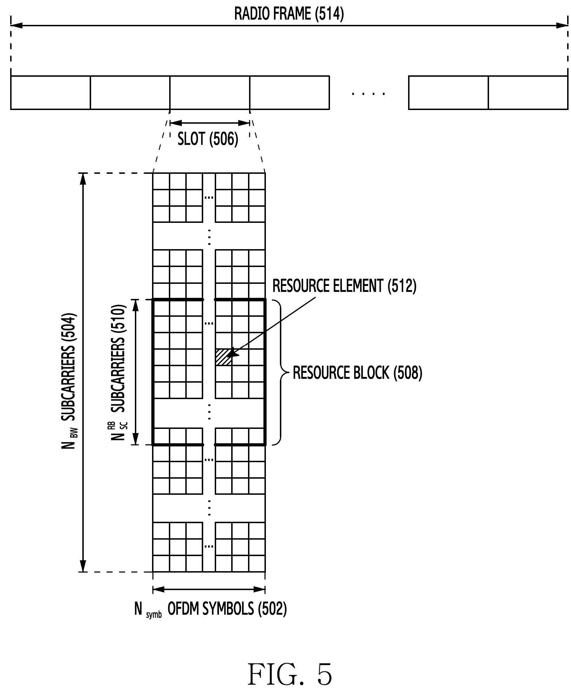

FIG. 5 illustrates an example of a resource structure of a time-frequency domain supported by a wireless communication system. FIG. 5 exemplifies a basic structure of a time-frequency domain, which is a radio resource domain in which data or a control channel is transmitted in a downlink or an uplink in a 5G NR system to which the present embodiment may be applied.

Referring to FIG. 5, a horizontal axis indicates a time domain, and a vertical axis indicates a frequency domain. A minimum transmission unit in the time domain is an OFDM symbol, and N_{symb} OFDM symbols 502 are gathered to configure a slot 506. Referring to FIG. 5, in the wireless communication system to which the present invention is applied, a radio frame 514 may be defined as having a length of 10 ms, which is configured with 10 subframes having the same length of 1 ms. In addition, the radio frame 514 may be divided into half-frames of 5 ms, and each half-frame includes 5 subframes. In FIG. 5, the slot 506 may be configured with 14 OFDM symbols, but a length of the slot may vary according to subcarrier spacing. For example, in a case of numerologies having subcarrier spacing of 15 khz, the slot is configured to have a length of 1 ms, which is the same length as a subframe. In contrast, in a case of numerologies having subcarrier spacing of 30 khz, the slot is configured with 14 OFDM symbols, but two slots may be included in one subframe with a length of 0.5 ms.

That is, a subframe and a frame are defined with a fixed time length, and a slot is defined as the number of symbols, such that a time length thereof may vary according to subcarrier spacing. Referring again to FIG. 5, a radio resource supported by the wireless communication system to which the invention proposed in the present specification may be applied may be configured with a symbol, which is a plurality of time resources, and a subcarrier, which is a plurality of frequency resource, and each of the time resources and the frequency resources may be represented by a two-dimensional resource grid. In FIG. 5, one quadrilateral, which is the smallest physical resource configured with one sub-carrier and one symbol in the resource grid, is referred to as a resource element (RE) 512.

In the wireless communication system to which the invention proposed in the present specification may be applied, a minimum transmission unit in the frequency domain is a subcarrier, and a carrier bandwidth configuring the resource grid is configured with N_{BW} subcarriers 504.

A basic unit of a resource in the time-frequency domain is a resource element (hereinafter referred to as 'RE') **5**12, and may be indicated as an OFDM symbol index and a subcarrier index. A resource block 508 may include a plurality of resource elements 512. In a wireless communication system to which the present invention proposed in this specification may be applied, a resource block (RB) 508 (or a physical resource block, hereinafter 'PRB') may be defined as N_{symb} consecutive OFDM symbols in the time domain and N_{SC}^{RB} consecutive subcarriers in the frequency domain. In an NR system, a resource block (RB) **5**08 may be defined as N_{SC}^{RB} consecutive subcarriers **5**10 in the frequency domain. One RB **5**08 includes N_{SC}^{RB} REs **5**12 on a frequency axis.

In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than an upper limit (e.g., 7.125 GHz) defined in the specifications. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than a lower limit (e.g., 24.25GHz) defined in the standard. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| | | | | | | | |
|---|---|---|---|---|---|---|---|
| Channel bandwidth [MHz] | SCS | 5 | 10 | 20 | 50 | 80 | 100 |
| Transmissi on bandwidth configuration N_{RB} | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| | | | | | |
|---|---|---|---|---|---|
| Channel bandwidth [MHz] | SCS | 50 | 100 | 200 | 400 |
| Transmis sion bandwidth configuratio n NRB | 60kHz | 66 | 132 | 264 | N/A |
| | 120kHz | 32 | 66 | 132 | 264 |

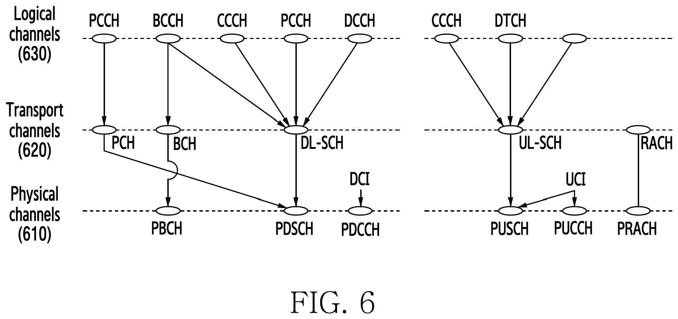

FIG. 6 illustrates an example of channels in a communication standard.

FIG. 6 illustrates an example of channels in a communication standard. The channels may include a physical channel 610, a transport channel 620, and a logical channel 630 according to layers defined in the communication standard.

Referring to FIG. 6, the physical channel 610 may provide functions (e.g., channel coding, HARQ processing, modulation, multi-antenna processing, and resource mapping) that are necessary to generate physical signals in a physical layer. In the physical layer, the physical signals are modulated in an OFDM scheme and may be transmitted in a wireless environment via a time-frequency resource (e.g., the resource of the resource grid of FIG. 5).

In downlink transmission, the physical channel 610 may include at least one of a physical broadcast channel (PBCH), a physical downlink shared channel (PDSCH), or a physical downlink control channel (PDCCH). The PDCCH may be used to carry downlink control information (DCI). In general, downlink data may include symbols transmitted through the PDSCH, and a downlink control signal may refer to symbols transmitted through the PDCCH. In addition, in a downlink, an SS/PBCH block including a synchronization signal (e.g., a primary synchronization signal (PSS), or a secondary synchronization signal (SSS)) for synchronization and a broadcast signal (e.g., PBCH) may be transmitted in addition to channels illustrated in FIG. 6. In addition, in the downlink, a channel state information-reference signal (CSI-RS) for obtaining measurement or channel information, a demodulation reference signal (DMRS) for channel estimation and demodulation, and a phase tracking reference signal (PTRS) may be transmitted.

In uplink transmission, the physical channel 610 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may include symbols transmitted through the PUSCH, and an uplink control signal may refer to symbols corresponding to the UCI. For example, the UCI may include at least one of a scheduling request (SR), a hybrid automatic request (HARQ)-acknowledge (ACK) bit(s), or channel state information (CSI). In addition, in uplink, the DMRS for channel estimation and demodulation, and the PTRS may be transmitted in the downlink for the channel estimation, in addition to the channels illustrated in FIG. 6.

The transport channel 620 may connect a physical layer and a medium access channel (MAC) layer located at a higher level of the physical layer, and may be classified according to how data is transmitted through a wireless interface. In the downlink, the transport channel 620 may include at least one of a paging channel (PCH) for paging, a broadcast channel (BCH) for broadcasting system information, and a downlink shared channel (DL-SCH) transmission of downlink data. In the uplink, the transport channel 620 may include at least one of a random access channel (RACH) for transmission of a random access preamble or an uplink shared channel (UL-SCH) for transmission of downlink data.

The logical channel 630 is located above the transport channel and is mapped to the transport channel 620. The logical channel 630 may be classified into a control channel for transmitting control area information and a traffic channel for transmitting user area information. The control channel of the logical channel 630 may include at least one of a paging control channel (PCCH), a broadcast control channel (BCCH), a common control channel (CCCH), or a dedicated control channel (DCCH). The traffic channel of the logical channel 630 may include a dedicated traffic channel (DTCH).

In describing embodiments of the present disclosure, the random access signal may include sequences transmitted through a physical random access channel (PRACH). 'data' may include signals other than a reference signal. As an example, 'data' obtained by a receiver in uplink communication may include signals transmitted through the PUSCH. However, the PUSCH is an example, and it is certain that the embodiments of the present disclosure may be applied to other channels (e.g., PDSCH, PBCH, PDCCH, and PUCCH) that require channel estimation.

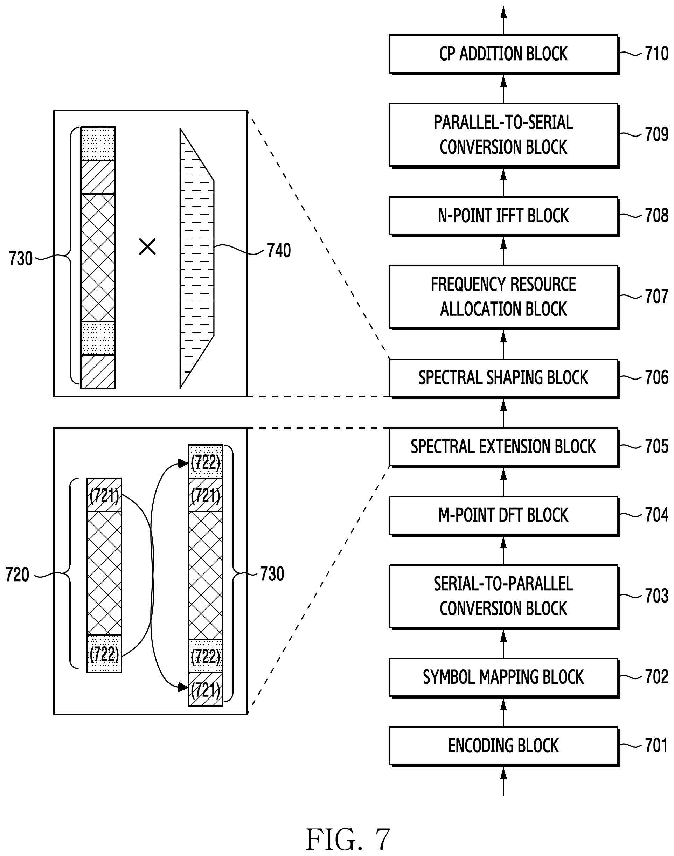

Hereinafter, in the following specification, a transmission device and a reception device for performing discrete Fourier transform spread orthogonal frequency division multiplexing (DFT-S-OFDM) based on frequency-domain spectral shaping (FDSS) will be described. A signal (or a waveform) based on DFT-S-OFDM may provide a lower peak-to-average power ratio (PAPR) and higher output power, compared with a signal (or a waveform) based on OFDM. As output power increases, a cell radius increases, and a signal to noise ratio (SNR) of the reception device may increase, and thus DFT-S-OFDM may be used for an uplink. However, it is not limited thereto. When a signal is transmitted based on DFT-S-OFDM in the transmission device, the reception device may receive the signal using a simple decoder such as OFDM. Even when DFT-S-OFDM is used, a PAPR may increase according to a modulation scheme. As an example, even when DFT-S-OFDM is used, as a size of QAM increases, a PAPR may increase. Therefore, when DFT-S-OFDM is performed based on FDSS, a PAPR may decrease. In FIG. 7 below, the transmission device for performing DFT-S-OFDM based on FDSS will be described.

FIG. 7 illustrates an example of an operation of a transmission device for performing discrete Fourier transform spread orthogonal frequency division multiplexing (DFT-S-OFDM) based on frequency-domain spectral shaping (FDSS).

Referring to FIG. 7, a transmission device (e.g., a terminal 120) may configure (or generate) a signal (e.g., an uplink signal) by using the DFT-S-OFDM. For example, the transmission device may modulate a waveform by using DFT-S. An operation of modulating a waveform based on a DFT-S scheme may be referred to as transform precoding.

According to an embodiment, the transmission device may include a plurality of blocks for performing the DFT-S-OFDM based on FDSS. For example, a transmission path of the transmission device may include an encoding block 701, a symbol mapping block 702, a serial-to-parallel conversion block 703, an M-point DFT block 704, a spectral extension block 705, a spectral shaping block 706, a frequency resource allocation block 707, an N-point IFFT block 708, a parallel-to-serial conversion block 709, and a cyclic prefix (CP) addition block 710. According to an embodiment, at least some of the plurality of blocks included in the transmission path may be omitted.

For example, the encoding block 701 may be used to encode a transmission bit string. The symbol mapping block 702 may be used to modulate a codeword generated according to encoding into a symbol based on at least one of binary phase-shift keying (BPSK), quadrature phase shift keying (QPSK), 16 quadrature amplitude modulation (QAM), 64QAM, 128QAM, or 256QAM. The serial-to-parallel conversion block 703 may be used to change the transmission path from serial to parallel. The M-point DFT block 704 may be used to perform a DFT operation of size M. The M may be set as an integer. According to an embodiment, the M-point DFT block 704 may also perform discrete frequency transform (DFT) spreading.

For example, the spectral extension block 705 and the spectral shaping block 706 may be configured for frequency-domain spectral shaping (FDSS). For example, the spectral extension block 705 may be used to configure data 730 by copying at least part of data 720. Each of data 721 and data 722 may be a part of the data 720. The data 721 and data 722 may configure both ends on a frequency domain of the data 720. The spectral extension block 705 may add the data 721 to a rear part of the data 720. The spectral extension block 705 may add the data 722 to a front part of the data 720. The spectral extension block 705 may extend the data 720 into the data 730 by further adding the data 721 and the data 722 to the data 720. A processor 311 may configure the data 730 to have a circular characteristic in a frequency domain. The spectral shaping block 706 may be used to multiply data 730 on a frequency domain (or an extended frequency domain) by a shaping filter 740. The spectral shaping block 706 may multiply, tone-by-tone, the data 730 on the frequency domain by the shaping filter 740. A PAPR may be reduced through a frequency extension operation and a spectral shaping operation performed based on the spectral extension block 705 and the spectral shaping block 706, which are described above.

For example, the frequency resource allocation block 707 may be used to allocate data obtained through the spectral shaping block 706 to a PRB(or an RE). The N-point IFFT block 708 may be used to perform an IFFT of size N. Data (or a signal) on a frequency domain may be changed, through the IFFT block 708, into data (or a signal) on a time domain. The parallel-to-serial conversion block 709 may be used to change the transmission path from parallel to serial. The CP addition block 710 may be used to add (or insert) a CP to a signal. Based on the plurality of blocks described above, the transmission device may transmit a transmission signal (e.g., an uplink signal).

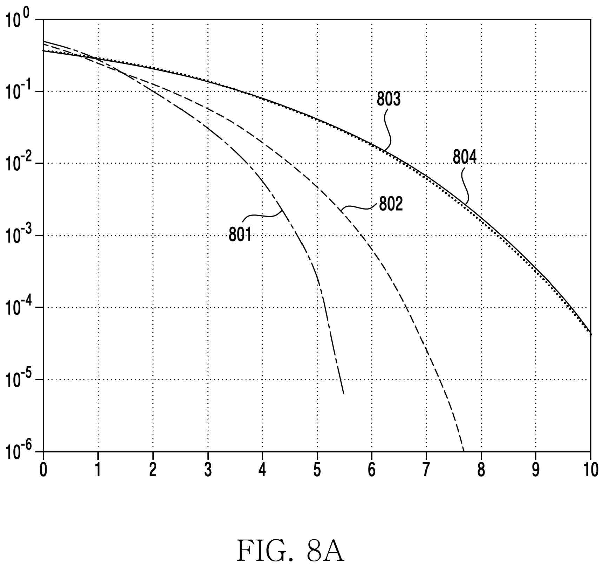

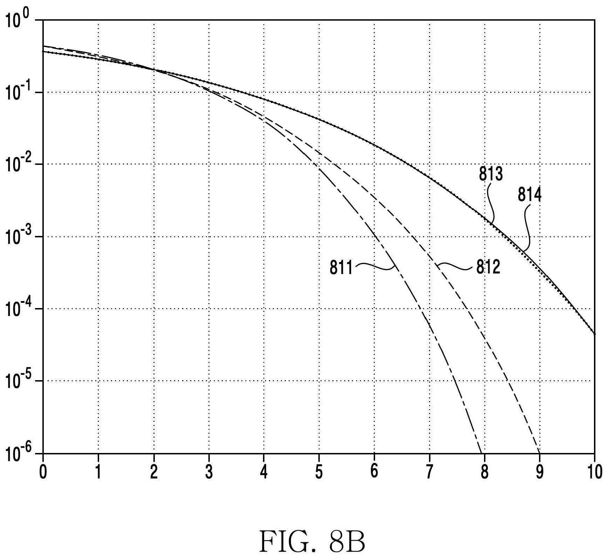

FIGS. 8A and 8B illustrate graphs for representing reduction performance of a PAPR according to use of DFT-S-OFDM based on FDSS.

Referring to FIG. 8A, an x-axis of a graph 801 to a graph 804 indicates a PAPR. A y-axis of the graph 801 to the graph 804 indicates a probability that a PAPR of a signal is greater than the PAPR of the x-axis. A unit of the x-axis is [dB].

The graph 801 to the graph 804 indicate PAPR performance in a case that a modulation scheme is QPSK, a size of data is 52 RB, and spectral extension of 10 RB, which is approximately 20% of the size of data, is applied. The graph 801 indicates PAPR performance of DFT-S-OFDM based on FDSS (or DFT-S-OFDM to which FDSS is applied). The graph 802 indicates PAPR performance of DFT-S-OFDM. The graph 803 indicates PAPR performance of OFDM. The graph 804 indicates theoretical PAPR performance of the OFDM.

Referring to the graph 801 and the graph 803 (or the graph 804), when the probability that the PAPR of the signal is greater than the PAPR of the x-axis is 10⁻⁴ (or 0.0001), the DFT-S-OFDM based on the FDSS may provide improved performance of 4 [dB] or more compared with the OFDM. Referring to the graph 801 and the graph 802, when the probability that the PAPR of the signal is greater than the PAPR of the x-axis is 10⁻⁴ (or 0.0001), the DFT-S-OFDM based on the FDSS may provide improved performance of approximately 1.5 [dB] compared with the DFT-S-OFDM.

Referring to FIG. 8B, an x-axis of a graph 811 to a graph 814 indicates a PAPR. A y-axis of the graph 811 to the graph 814 indicates a probability that a PAPR of a signal is greater than the PAPR of the x-axis. A unit of the x-axis is [dB].

The graph 811 to the graph 814 indicate PAPR performance when a modulation scheme is 256 QAM, a size of data is 52 RB, and spectral extension of 10 RB, which is approximately 20% of the size of data, is applied. The graph 811 indicates PAPR performance of DFT-S-OFDM based on FDSS (or DFT-S-OFDM to which FDSS is applied). The graph 812 indicates PAPR performance of DFT-S-OFDM. The graph 813 indicates PAPR performance of OFDM. The graph 814 indicates theoretical PAPR performance of the OFDM.

Referring to the graph 811 and the graph 813 (or the graph 804), when the probability that the PAPR of the signal is greater than the PAPR of the x-axis is 10⁻⁴ (or 0.0001), the DFT-S-OFDM based on the FDSS may provide improved performance of approximately 3 [dB] compared with the OFDM. Referring to the graph 811 and the graph 812, when the probability that the PAPR of the signal is greater than the PAPR of the x-axis is 10⁻⁴ (or 0.0001), the DFT-S-OFDM based on the FDSS may provide improved performance of approximately 1 [dB] compared with the DFT-S-OFDM.

Referring to FIGS. 8A and 8B, a transmission device may lower a PAPR of a transmission signal through the spectral extension block 705 and the spectral shaping block 706 of FIG. 7, and may secure better linearity through a designated power amplifier. Therefore, the transmission device may obtain a gain in signal quality through the FDSS.

As the FDSS is applied to a transmission path, a PAPR may be lowered, but more resources and power than the DFT-S-OFDM may be used. Therefore, in a reception device, when a signal generated (or configured) through the DFT-S-OFDM based on the FDSS is not properly processed, performance degradation may occur. In addition, since spectral extension is applied to a data signal in the transmission device, and a shaping filter is applied to the spectrally extended data signal, the reception device should perform channel estimation and inverse compensation of the shaping filter. The spectral extension may be applied to, and the shaping filter may be applied to a reference signal in the same manner as the data signal. When the spectral extension is applied to, and the shaping filter is applied to the reference signal, loss in the reference signal may occur. Accordingly, in the present specification below, design of the reference signal and an operation of the reception device when the DFT-S-OFDM based on the FDSS is used will be described.

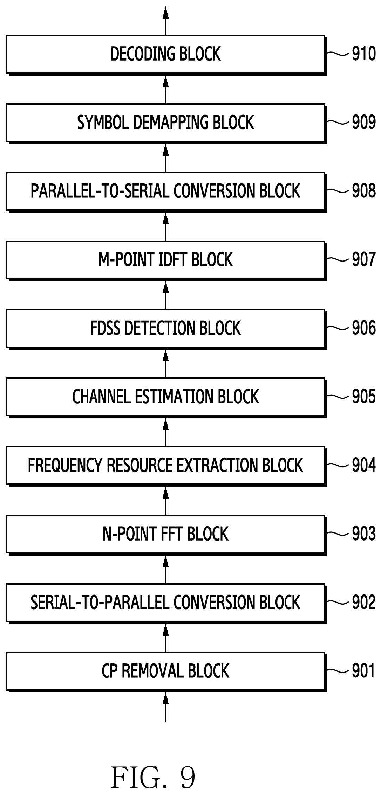

FIG. 9 illustrates an example of an operation of a reception device for receiving a signal configured through DFT-S-OFDM based on FDSS.

Referring to FIG. 9, a reception device (e.g., a base station 110) may receive a signal (e.g., an uplink signal) generated by using DFT-S-OFDM. For example, the reception device may include a plurality of blocks for receiving a signal (e.g., an uplink signal) generated by using DFT-S-OFDM based on FDSS. The plurality of blocks may be configured to perform operations opposite to the operations performed in the transmission device of FIG. 7.

For example, a reception path of the reception device may include a CP removal block 901, a serial-to-parallel conversion block 902, an N-point FFT block 903, a frequency resource extraction block 904, a channel estimation block 905, an FDSS detection block 906, an M-point IDFT block 907, a parallel-to-serial conversion block 908, a symbol demapping block 909, and a decoding block 910. According to an embodiment, at least some of the plurality of blocks included in the reception path may be omitted.

For example, the CP removal block 901 may be used to remove a CP of a reception signal. The CP removal block 901 may be used to perform an operation opposite to the operation of the CP addition block 710 of FIG. 7. The serial-to-parallel conversion block 902 may be used to change the reception path from serial to parallel. The serial-to-parallel conversion block 902 may correspond to the serial-to-parallel conversion block 703 of FIG. 7. The N-point FFT block 903 may be used to perform FFT of size N. The N-point FFT block 903 may be used to perform an operation opposite to the operation of the N-point IFFT block 708 of FIG. 7. Data (or a signal) on a time domain may be changed, through the N-point FFT block 903, into data (or a signal) on a frequency domain. The frequency resource extraction block 904 may be used to extract data from an allocated frequency resource (e.g., a PRB or an RE). As an example, the frequency resource extraction block 904 may be used to extract an RB signal of a specific user.

For example, the channel estimation block 905 and the FDSS detection block 906 may be configured for FDSS. The channel estimation block 905 may be used to perform a channel estimation by using a reference signal. The FDSS detection block 906 may be used to perform a combining operation as compensation for the shaping filter 740 of the spectral shaping block 706 of FIG. 7. A specific operation of the channel estimation block 905 and the FDSS detection block 906 will be described below through the equation described below.

For example, the M-point IDFT block 907 may be used to perform an IDFT operation of size M. The M may be set as an integer. The M-point IDFT block 907 may be used to perform an operation opposite to the operation of the M-point DFT block 704 of FIG. 7. The parallel-to-serial conversion block 908 may be used to change the reception path from parallel to serial. The symbol demapping block 909 may be used to demodulate a symbol based on at least one of binary phase-shift keying (BPSK), quadrature phase shift keying (QPSK), 16 quadrature amplitude modulation (QAM), 64QAM, 128QAM, or 256QAM. The decoding block 910 may be used to decode the codeword demodulated through the symbol demapping block 909.

Referring to the plurality of blocks of the reception path described above, a reception signal (e.g., a data signal or a reference signal) may be configured as shown in Equation 1. ${Y}_{k} = {H}_{k} {W}_{k} {X}_{k} + {N}_{k} , k = 0 , 1 , … , K - 1$

Referring to Equation 1, the *Yₖ* is a reception signal at a k-th tone. The *Hₖ* is a channel frequency response at the k-th tone. The *Xₖ* is a data signal and an extending signal according to spectral extension. The *Wₖ* is a shaping filter at the k-th tone. The *Nₖ* is a noise signal at the k-th tone. The K may be set as shown in Equation 2. $K = M + L$

Referring to Equation 2, the K is a length of a data signal and an extending signal according to spectral extension. The M is a length of a data signal. The M is the number of QAM symbols. The L is a length of an extending signal.

The *Xₖ* is a data signal and an extending signal according to spectral extension, related to a signal (or a data signal) of the *Sₖ* obtained by performing M-point DFT. The *Xₖ* may be set as shown in Equation 3. ${X}_{k} = \left\{\begin{matrix}{S}_{k + M - L / 2} , k = 0 , 1 , … , \frac{L}{2} - 1 \\ {S}_{k - L / 2} , k = \frac{L}{2} , \frac{L}{2} + 1 , … , K - \frac{L}{2} - 1 \\ {S}_{k + K - L / 2} , k = K - \frac{L}{2} , K - \frac{L}{2} + 1 , … , K - 1\end{matrix}\right.$

Referring to Equation 3, the *Xₖ* is a data signal and an extending signal according to spectral extension, related to a signal (or a data signal) of the *Sₖ* obtained by performing M-point DFT. In a frequency domain in which the k is from 0 to $\frac{L}{2} - 1$, *S*_{*k*+*M-L*/2} may be configured. The *S*_{*k+M-L*/2} may correspond to the data 721 of FIG. 7. In a frequency domain for a data signal in which the k is from $\frac{L}{2}$ to $K - \frac{L}{2} - 1$, the *S*_{*k-L*/2}may be configured. The *S*_{*k-L*/2} may correspond to the data 720 of FIG. 7. In a frequency domain in which the k is from $K - \frac{L}{2}$ to K - 1, the *S*_{*k+K-L*/2} may be configured. The *S*_{*k+K-L*/2} may correspond to the data 722 of FIG. 7.

MMSE equalization for the shaping filter may be performed on the *Yₖ,* which is the reception signal of Equation 1. The reception device may perform MMSE equalization for the shaping filter on the *Yₖ,* which is the reception signal. The *Yₖ* may be represented as shown in the following equation. ${\hat{X}}_{k} = {G}_{k}^{∗} {Y}_{k} , k = 0 , 1 , … , K - 1$

Referring to Equation 4, the *X̂ₖ* is a data signal and an extending signal estimated according to MMSE equalization at the k-th tone. The *Yₖ* is the reception signal at the k-th tone. The *Gₖ* is a weight (e.g., an MMSE weight) at the k-th tone. The *Gₖ* may be configured as shown in Equation 5. ${G}_{k} = \frac{{\hat{H}}_{k} {W}_{k}}{{\left|{\hat{H}}_{k} {W}_{k}\right|}^{2} + {σ}_{n}^{2}} , k = 0 , 1 , … , K - 1$

Referring to Equation 5, the *Wₖ* is a shaping filter at the k-th tone. The *Ĥₖ* is an estimated channel frequency response at the k-th tone. The *σₙ* is a noise and interference component.

The reception device may identify the *Xₖ* received (or estimated) for the *X̂ₖ* by using Equation 4 and Equation 5. The *X̂ₖ*may be a signal extended according to spectral extension, compared with an actual data signal (i.e., *Sₖ*). The reception device may perform a combining operation by using the FDSS detection block 906. A data signal (or data) according to the combining operation may be configured as shown in Equation 6. ${\hat{S}}_{m} = \left\{\begin{matrix}{\hat{X}}_{m + \frac{L}{2}} + {\hat{X}}_{m + M + \frac{L}{2}} , for m = 0 , 1 , … , \frac{L}{2} - 1 \\ {\hat{X}}_{m + L} for m = \frac{L}{2} , \frac{L}{2} + 1 , … , M - \frac{L}{2} - 1 \\ {\hat{X}}_{m + \frac{L}{2}} + {\hat{X}}_{m + M - \frac{L}{2}} , for m = M - \frac{L}{2} , M - \frac{L}{2} + 1 , … , M - 1\end{matrix}\right.$

Referring to Equation 6, the *Ŝₘ* is an estimated data signal. The M is a length of a data signal. The M is the number of QAM symbols. The reception device may obtain (or identify) the *Ŝₘ* by summing the same data.

According to an embodiment, the shaping filter 740 identical to a data signal may be applied to a reference signal. Since the shaping filter 740 identical to the data signal is applied to the reference signal, the reception device may not receive information related to the shaping filter 740 of FIG. 7. Therefore, when estimating a channel, the reception device may perform correction such that the shaping filter 740 is included in the channel. However, when a zadoff-chu (ZC) sequence is used for the reference signal in an uplink, spectral extension and a shaping filter may not need to be applied. For example, since the ZC sequence has a constant magnitude in both a time domain and a frequency domain, it may already have low PAPR. Therefore, when the zadoff-chu (ZC) sequence is used for the reference signal in the uplink, the spectral extension and the shaping filter may not need to be applied. When the reference signal is transmitted through a frequency domain (or subcarriers) extended according to spectral extension without using the shaping filter, resources and power may be used more than necessary. Therefore, hereinafter, an example of a transmission device (e.g., a terminal 120) and a reception device (e.g., the base station 110) for variably changing a frequency domain in which a reference signal is transmitted (or a length of the reference signal) will be described.

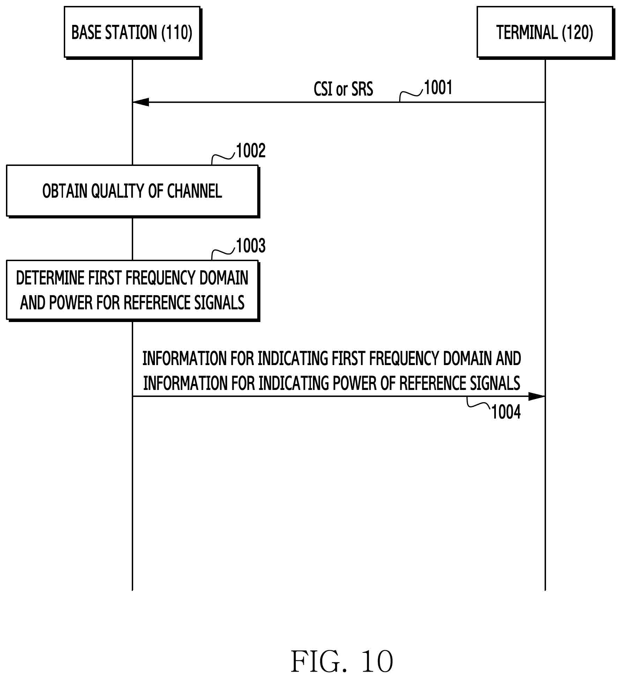

FIG. 10 illustrates an example of operations of a base station and a terminal for determining a frequency domain in which a reference signal is transmitted and power of the reference signal.

Referring to FIG. 10, in operation 1001, a terminal 120 may transmit channel state information (CSI) or a sounding reference signal (SRS) to a base station 110.

According to an embodiment, the terminal 120 may transmit the CSI to the base station 110. For example, the base station 110 may transmit a cell-specific reference signal (CRS) or a channel state information-reference signal (CSI-RS) to the terminal 120. The terminal 120 may transmit the CSI to the base station 110 based on the CRS or the CSI-RS.

For example, the base station 110 may transmit the CRS or the CSI-RS to the terminal 120 to identify a state of a channel (or a downlink channel). For example, the CRS or the CSI-RS may be generated by applying a weight identified based on a pseudo random sequence. The base station 110 may transmit the generated CRS or CSI-RS to the terminal 120. According to an embodiment, the CRS or the CSI-RS may be periodically transmitted or may be aperiodically transmitted. The terminal 120 may identify CQI indicating a channel state of a downlink identified based on the CRS or the CSI-RS. The terminal 120 may determine a CQI index satisfying a designated condition among a plurality of CQI indexes. When receiving data (e.g., a single PDSCH block), the terminal 120 may determine a CQI index indicating a modulation scheme and a code rate such that a BLER of a designated ratio (e.g., 10% in a case of enhanced Mobile broadband (eMBB), 0.001% in a case of ultra-reliable and low latency communications (URLLC)) is not exceeded.

The terminal 120 may identify the state of the channel (the downlink channel) based on the CRS or the CSI-RS. The terminal 120 may determine signal quality to identify the state of the channel. In the present disclosure, the signal quality may be, for example, at least one of reference signal received power (RSRP), beam reference signal received power (BRSRP), reference signal received quality (RSRQ), received signal strength indicator (RSSI), signal to interference and noise ratio (SINR), carrier to interference and noise ratio (CINR), signal to noise ratio (SNR), error vector magnitude (EVM), bit error rate (BER), or block error rate (BLER). In addition to the above-described example, other terms having equivalent technical meanings or other metrics representing channel quality may of course be used. Hereinafter, in the present disclosure, high signal quality means a case that a signal quality value related to a signal magnitude is large or a signal quality value related to an error rate is small. As signal quality is higher, it may mean that a smooth wireless communication environment is guaranteed. Hereinafter, in the present disclosure, an SINR is exemplified as a metric of signal quality for determining CQI. The terminal 120 may identify a channel state of the downlink based on a change (or transformation) of the CRS or the CSI-RS. The terminal 120 may identify (or measure) an SINR for the CRS or the CSI-RS. The terminal 120 may transmit information indicating the SINR for the CRS or the CSI-RS. Information indicating an SINR for a reference signal may be referred to as CQI. For example, as the SINR is higher, a value of the CQI may be set to be higher. As the SINR is lower, a value of the CQI may be set to be lower.

The base station 110 may receive channel state information (CSI) including CQI. The base station 110 may receive the CQI based on the CSI. The base station 110 may obtain information related to a modulation scheme (e.g., QPSK, 16QAM, or 64 QAM) or a code rate preferred in a terminal 120 based on the CQI. The base station 110 may identify a modulation and coding scheme (MCS) based on a CQI index included in the CQI. For example, the base station 110 may identify the MCS based on a predefined CQI table and MCS table. The CQI table may indicate a modulation scheme or a code rate having a modulation order that is higher as a CQI index value is higher. The base station 110 may set an MCS index to be higher as the CQI index is higher. The base station 110 may set the MCS index to be lower as the CQI index is lower. The MCS index set according to a value of the CQI may be used for modulation and coding of downlink data.

According to an embodiment, the terminal 120 may transmit the SRS to the base station 110. For example, the terminal 120 may transmit the SRS in at least one direction. The base station 110 may identify a channel state based on the received SRS.

In operation 1002, the base station 110 may obtain quality of a channel. For example, the base station 110 may obtain (or identify) quality of a channel between the base station 110 and the terminal 120. The quality of the channel may include channel selectivity.

In operation 1003, the base station 110 may determine a first frequency domain for a reference signal (e.g., a demodulate reference signal (DMRS)) and power of the reference signal. For example, the base station 110 may determine the first frequency domain for the reference signal and the power of the reference signal based on the quality of the channel. For example, the base station 110 may determine the first frequency domain for the reference signal and the power of the reference signal based on not only the quality of the channel but also at least one of a spectral extension length regarding FDSS and/or performance of a shaping filter.

In operation 1004, the base station 110 may transmit, to the terminal 120, information for indicating the first frequency domain and/or information for indicating power of reference signals. For example, the base station 110 may transmit, to the terminal 120, the information for indicating the first frequency domain and/or the information for indicating the power of the reference signals through at least one of a radio resource control (RRC) message, a medium access control (MAC) control element (CE), or a downlink control indicator (DCI). For example, the information for indicating the first frequency domain may indicate a ratio of the first frequency domain to an extended frequency domain extended based on spectral extension. For example, the information for indicating the power of the reference signals may be configured based on energy per resource element (EPRE).

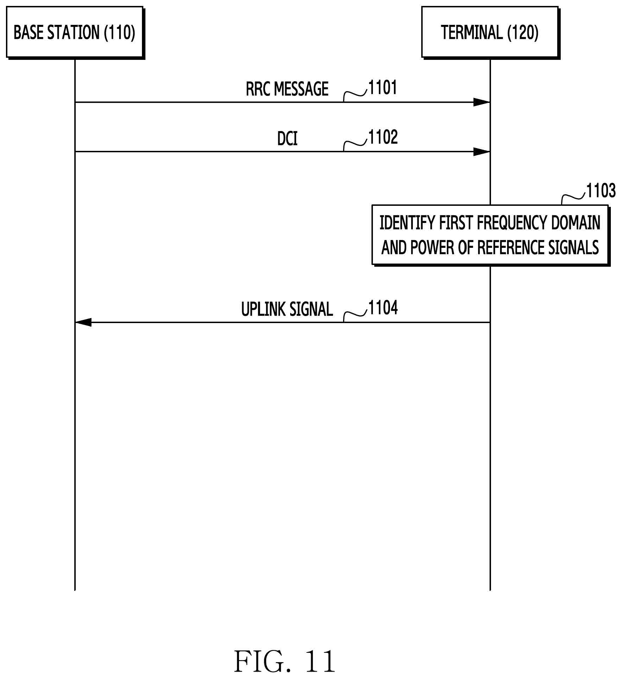

FIG. 11 illustrates an example of operations of a base station and a terminal for transmitting an uplink signal including a reference signal and a data signal.

Referring to FIG. 11, in operation 1101, a base station 110 may transmit an RRC message to a terminal 120. For example, the RRC message may include at least one of information indicating a first frequency domain for reference signals (e.g., a DMRS) and/or information indicating power of the reference signals.

In operation 1102, the base station 110 may transmit downlink control information (DCI) to the terminal 120. For example, the DCI may be transmitted through a physical downlink control channel (PDCCH). The DCI may include resource allocation information related to a second frequency domain for data signals (e.g., a PDSCH). The first frequency domain may comprise the second frequency domain. The DCI may include information required to decode the data signals. For example, the DCI may have DCI format 1_x (x=0, 1, 2, ...) of an NR standard.

In operation 1103, the terminal 120 may identify the first frequency domain and the power of the reference signals. For example, the terminal 120 may identify the first frequency domain for the reference signals and/or the power of the reference signals based on at least one of the RRC message and/or the DCI.

For example, the terminal 120 may identify the first frequency domain for the reference signals among an extended frequency domain of FDSS. The terminal 120 may identify the power of the reference signals to be transmitted through the first frequency domain.

In operation 1104, the terminal 120 may transmit an uplink signal to the base station 110. The uplink signal may be transmitted through the extended frequency domain of the FDSS. The base station 110 may receive the uplink signal from the terminal 120 through the extended frequency domain of the FDSS.

For example, the uplink signal may include at least one of reference signals, data signals, and/or extending signals. The extending signals may be configured based on at least part of the data signals. The extending signals may correspond to at least part of the data signals.

The reference signals may be transmitted through the first frequency domain among the extended frequency domain. The data signals may be transmitted through the second frequency domain among the extended frequency domain. The extending signals may be transmitted through a third frequency domain among the extended frequency domain. The extended frequency domain may comprise the second frequency domain and the third frequency domain. The extended frequency domain may be configured with the second frequency domain and the third frequency domain. The first frequency domain may comprise the second frequency domain. The first frequency domain may comprise the second frequency domain and may be comprised in the extended frequency domain.

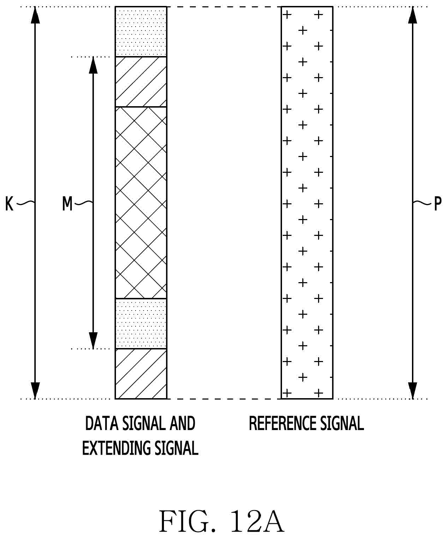

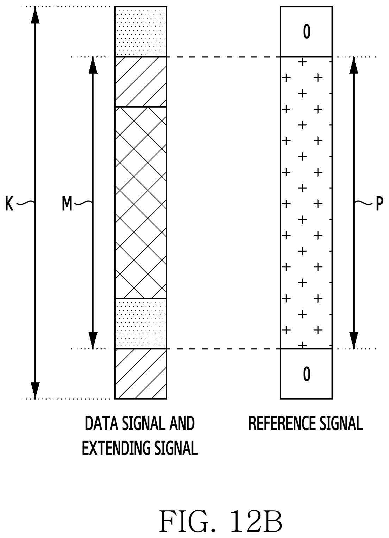

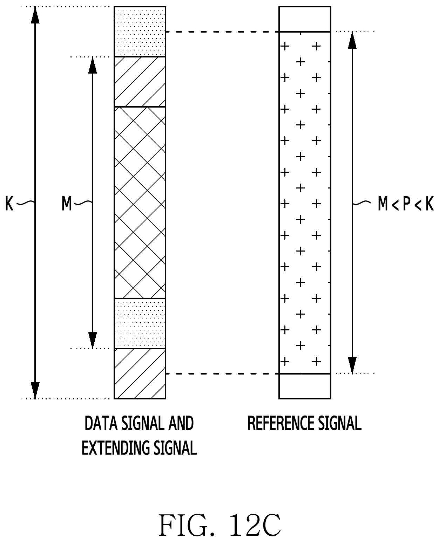

FIGS. 12A, 12B, and 12C illustrate examples of a size of a first frequency domain.

Referring to FIGS. 12A to 12C, a base station 110 may determine a first frequency domain for reference signals based on communication quality of a channel between the base station 110 and a terminal 120. According to an embodiment, the base station 110 may determine the first frequency domain among an extended frequency domain of FDSS based on the communication quality of the channel between the base station 110 and the terminal 120.

According to an embodiment, the base station 110 may determine the first frequency domain (or a length of a reference signal) among the extended frequency domain of the FDSS based on a channel environment and/or performance for a combining operation. The base station 110 may determine the first frequency domain among the extended frequency domain of the FDSS by using Equation 7 to Equation 11 described below. An operation of the base station 110 for determining the first frequency domain is exemplary, and is not limited thereto.

For example, the base station 110 may identify an average value of a signal for each tone after performing MMSE equalization. The average value of the signal for each tone may be set as shown in the following equation. ${μ}_{k} = E \left({\hat{X}}_{k}\right) = \frac{{\left|{\hat{H}}_{k}{W}_{k}\right|}^{2} {σ}_{x}^{2}}{{\left|{\hat{H}}_{k}{W}_{k}\right|}^{2} + {σ}_{n}^{2}} = \frac{{\left|\left({H}_{k}+{e}_{k}\right){W}_{k}\right|}^{2} {σ}_{x}^{2}}{{\left|\left({H}_{k}+{e}_{k}\right){W}_{k}\right|}^{2} + {σ}_{n}^{2}} , for k = 0 , 1 , … , K - 1$

Referring to Equation 7, the ${μ}_{k}^{□}$ is an average value of the estimated signal *X̂ₖ* for a k-th tone. Equation 7 may be configured based on Equation 5. The *X̂ₖ* is a data signal and an extension signal estimated according to MMSE equalization at the k-th tone. The *Ĥₖ* is an estimated channel frequency response at the k-th tone. The *Wₖ* is a shaping filter at the k-th tone. The *σₙ*is a noise and interference component. The *eₖ* is a channel estimation error at the k-th tone. The ${σ}_{x}^{2}$ is power of a transmission signal.

For example, the channel estimation error *eₖ* may be changed based on an algorithm for channel estimation and/or a length P of a reference signal. An average value of an estimated signal for each tone after a combining operation may be set as shown in the following equation. ${{μ}^{˜}}_{m} = \left\{\begin{matrix}{μ}_{m + \frac{L}{2}} + {μ}_{m + M + \frac{L}{2}} , for m = 0 , 1 , … , \frac{L}{2} - 1 \\ {μ}_{m + L} , for m = \frac{L}{2} , \frac{L}{2} + 1 , … , M - \frac{L}{2} - 1 \\ {μ}_{m + \frac{L}{2}} + {μ}_{m + M - \frac{L}{2}} , for m = M - \frac{L}{2} , M - \frac{L}{2} + 1 , … , M - 1\end{matrix}\right.$

Referring to Equation 8, the *µ̃ₘ* is an estimated data signal. The M is a length of a data signal. The M indicates the number of QAM symbols. The base station 110 may obtain (or identify) the *µ̃ₘ* by summing the same data.

After the base station 110 performs inverse discrete Fourier transform (IDFT), an average of each sample in a time domain may be configured as shown in the following equation. $μ = {\sum }_{m = 0}^{M - 1} {{μ}^{˜}}_{m}$

The base station 110 may identify a signal to interference and noise ratio (SINR) based on the average of each sample. The SINR may be configured as shown in the following equation. $SINR = \frac{μ}{1 - μ}$

The base station 110 may determine the first frequency domain (or the length of the reference signal) based on the SINR according to Equation 10. For example, the base station 110 may determine the first frequency domain (or the length of the reference signal) as a value at which the SINR is maximized. The base station may determine the first frequency domain (or the length of the reference signal) based on the following equation. $P = {argmax}_{P} SINR$

Referring to Equation 11, the P is a length of the first frequency domain (or the number of tones configuring the first frequency domain and the length of the reference signal). In FIGS. 12A to 12C below, an example of the first frequency domain (or the length of the reference signal) for a second frequency domain (or a length of a data signal) and a third frequency domain (or a length of an extending signal) will be described.

In FIGS. 12A to 12C, the first frequency domain may be referred to as the length P of the reference signal. The length P of the reference signal may mean the number of tones for transmitting the reference signal. The first frequency domain may be configured with P tones.

In FIGS. 12A to 12C, the extended frequency domain may be referred to as a length K of the data signal and the extending signal. The length K of the data signal and the extending signal may indicate the number of tones for the data signal and the extending signal. The extended frequency domain may be configured with K tones.

In FIGS. 12A to 12C, the second frequency domain may be referred to as a length M of the data signal. The length M of the data signal may mean the number of tones for the data signal. The second frequency domain may be configured with M tones.

In FIGS. 12A to 12C, the third frequency domain may be referred to as a length K-M of the extending signal. The length K-M of the extending signal may indicate the number of tones for the data signal. The third frequency domain may be configured with K-M tones.

Referring to FIG. 12A, the base station 110 may set the length P of the reference signal to be the same as the length K of the data signal and the extending signal. When the length P of the reference signal is the same as the length K of the data signal and the extending signal, the base station 110 may estimate all channels corresponding to K tones. The base station 110 may use the estimated channels for all K tones for an FDSS detection operation (or a combining operation). However, since the third frequency domain in which the extending signal is transmitted is a domain in which power of a shaping filter is set to be small, it may have a small influence on a channel estimation. When the length P of the reference signal is the same as the length K of the data signal and the extending signal, since resources and/or power for the third frequency domain are used, resources and/or power may be used more than necessary.

Referring to FIG. 12B, the base station 110 may set the length P of the reference signal to be the same as the length M of the data signal. When the length P of the reference signal is the same as the length M of the data signal, the base station 110 may estimate channels corresponding to M tones. The base station 110 may identify a channel estimation value for the third frequency domain through extrapolation based on a result of a channel estimation corresponding to M tones. For example, the base station 110 may perform an FDSS detection operation (or a combining operation) for the extending signals by identifying a channel estimation value at an edge of the second frequency domain as the channel estimation value for the third frequency domain based on the result of the channel estimation corresponding to M tones.

For example, identifying the channel estimation value for the third frequency domain through extrapolation or identifying the channel estimation value at the edge of the second frequency domain as the channel estimation value for the third frequency domain may cause performance degradation in an environment in which selectivity of a channel is high. Therefore, as the reference signal (or power of the reference signal) is concentrated in the second frequency domain when selectivity of the channel is low, performance of channel estimation may be increased.

Referring to FIG. 12C, the base station 110 may set the length P of the reference signal to be longer than the length M of the data signal and shorter than the length K of the data signal and the extending signal. For example, the base station 110 may set the length P of the reference signal based on communication quality of a channel (e.g., channel selectivity), performance of a shaping filter, a ratio of K/M, and/or combining performance of spectral extension. Even when K/M is set to be large to reduce a PAPR, the length P of the reference signal may be set to a value between M and K.

The length P of the reference signal according to FIGS. 12A to 12C may be fixed based on a channel environment (or communication quality of a channel) and/or combining performance of spectral extension (or performance of a shaping filter). According to an embodiment, the length P of the reference signal may be dynamically changed based on at least one message exchanged between the terminal 120 and the base station 110. The at least one message may be transmitted through an RRC configuration or DCI information. For example, the base station 110 may determine the length P of the reference signal and the power of the reference signal based on at least one of communication quality of a channel (or a channel environment) between the terminal 120 and the base station 110, performance of the shaping filter, the ratio of K/M, and/or the combining performance of the spectral extension. The base station 110 may transmit, to the terminal 120, information for indicating the length P of the reference signal (or the first frequency domain) and information for indicating the power of the reference signals. The terminal 120 may transmit, to the base station 110, an uplink signal including reference signals, data signals, and extending signals based on the information for indicating the length P of the reference signal (or the first frequency domain) and the information for indicating the power of the reference signals.

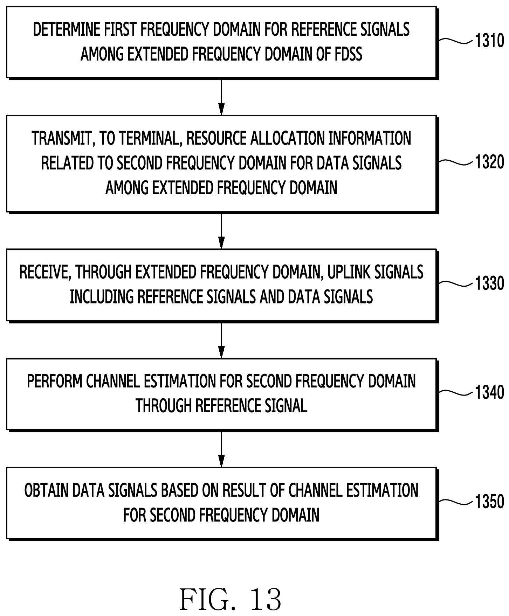

FIG. 13 illustrates an example of an operation of a base station for determining a first frequency domain for reference signals.

Referring to FIG. 13, in operation 1310, a base station 110 may determine a first frequency domain for reference signals among an extended frequency domain of FDSS. For example, the base station 110 may determine the first frequency domain for the reference signals among the extended frequency domain of the FDSS based on communication quality of a channel between the base station 110 and a terminal 120.

According to an embodiment, the base station 110 may obtain (or identify) the communication quality of the channel between the base station 110 and the terminal 120.

For example, the base station 110 may obtain the communication quality of the channel based on receiving CSI from the terminal 120. The base station 110 may transmit a cell-specific reference signal (CRS) or a channel state information-reference signal (CSI-RS) to the terminal 120. The base station 110 may receive CSI including CQI from the terminal 120 based on transmitting the CRS or the CSI-RS to the terminal 120. After transmitting the CRS or the CSI-RS to the terminal 120, the base station 110 may receive the CSI including the CQI from the terminal 120. The base station 110 may obtain (or identify) the communication quality of the channel between the base station 110 and the terminal 120 based on the CQI.

For example, the base station 110 may obtain (or identify) the communication quality of the channel between the base station 110 and the terminal 120 based on receiving an SRS from the terminal 120. For example, the terminal 120 may transmit the SRS in at least one direction. The base station 110 may identify the communication quality of the channel based on the received SRS.

According to an embodiment, the base station 110 may determine the first frequency domain for the reference signals among the extended frequency domain of the FDSS. The base station 110 may determine the first frequency domain for reference signals included in an uplink signal received from the terminal 120.

According to an embodiment, the base station 110 may determine the first frequency domain based on performance of a shaping filter for an uplink signal configured based on the FDSS and the communication quality of the channel.

According to an embodiment, the base station 110 may transmit, to the terminal 120, information for indicating the first frequency domain and information for indicating power of the reference signals in the first frequency domain. For example, the base station 110 may transmit, to the terminal 120, the information for indicating the first frequency domain and the information for indicating the power of the reference signals in the first frequency domain through at least one of a radio resource control (RRC) message, a medium access control (MAC) control element (CE), or a downlink control indicator (DCI). For example, the information for indicating the first frequency domain may indicate a ratio of the first frequency domain to the extended frequency domain. For example, the information for indicating the power of the reference signals may be configured based on energy per resource element (EPRE).

In operation 1320, the base station 110 may transmit resource allocation information related to a second frequency domain for data signals among the extended frequency domain to the terminal 120. For example, the base station 110 may transmit the resource allocation information related to the second frequency domain to the terminal 120 by using DCI. For example, the second frequency domain may be comprised in the first frequency domain. According to an embodiment, the information for indicating the first frequency domain and the information for indicating the power of the reference signals in the first frequency domain may be transmitted to the terminal 120 together with the resource allocation information.

In operation 1330, the base station 110 may receive, through the extended frequency domain, uplink signals configured based on the FDSS and including the reference signals and the data signals. For example, the uplink signal may be configured based on the FDSS. The uplink signal may include a reference signal, a data signal, and an extending signal. The extending signal may correspond to at least part of the data signal. The extending signal may be configured with at least part of the data signal based on the FDSS.

For example, the base station 110 may receive the reference signal through the first frequency domain among the extended frequency domain. The base station 110 may receive the data signal and the extending signal through the extended frequency domain. The base station 110 may receive the data signal through the second frequency domain among the extended frequency domain. The base station 110 may receive the extending signal through a third frequency domain.

In operation 1340, the base station 110 may perform a channel estimation for the second frequency domain through the reference signal received through the first frequency domain. For example, the base station 110 may identify a channel estimation value for the second frequency domain based on a result of a channel estimation for the first frequency domain.

According to an embodiment, the base station 110 may identify a channel estimation value for the third frequency domain based on the result of the channel estimation for the first frequency domain. For example, the base station 110 may identify the channel estimation value for the third frequency domain through extrapolation based on the result of the channel estimation for the first frequency domain. For example, the base station 110 may identify a channel estimation value at an edge of the second frequency domain as the channel estimation value for the third frequency domain based on the result of the channel estimation for the first frequency domain.

According to an embodiment, the base station 110 may identify a channel estimation value for the extended frequency domain based on the result of the channel estimation for the first frequency domain.

In operation 1350, the base station 110 may obtain the data signals based on a result of the channel estimation for the second frequency domain. For example, the base station 110 may obtain the data signals based on the result of the channel estimation for the second frequency domain. For example, the base station 110 may obtain the extending signals based on a result of the channel estimation for the third frequency domain. The base station 110 may improve accuracy of the data signals based on the extending signals in which the data signals are duplicated.

According to an embodiment, a device of a base station may comprise a transceiver, memory storing instructions, and a processor. The instructions, when executed by the at least one processor individually or collectively, may cause the device to determine, based on communication quality of a channel between the base station and a terminal, a first frequency domain for reference signals among an extended frequency domain of frequency domain spectrum shaping (FDSS). The instructions, when executed by the at least one processor individually or collectively, may cause the device to transmit resource allocation information related to a second frequency domain for data signals among the extended frequency domain to the terminal. The instructions, when executed by the at least one processor individually or collectively, may cause the device to receive uplink signals configured based on the FDSS and comprising the reference signals and the data signals through the extended frequency domain. The instructions, when executed by the at least one processor individually or collectively, may cause the device to perform a channel estimation for the second frequency domain through the reference signal received through the first frequency domain. The instructions, when executed by the at least one processor individually or collectively, may cause the device to, based on a result of the channel estimation for the second frequency domain, obtain the data signals.

According to an embodiment, the instructions, when executed by the at least one processor individually or collectively, may cause the device to transmit information for indicating the first frequency domain and information for indicating power of the reference signals in the first frequency domain to the terminal.

According to an embodiment, the instructions, when executed by the at least one processor individually or collectively, may cause the device to transmit, to the terminal, the information for indicating the first frequency domain and the information for indicating power of the reference signals through at least one of a radio resource control (RRC) message, a medium access control (MAC) control element (CE), or downlink control indicator (DCI).

According to an embodiment, the information for indicating the first frequency domain may indicate a ratio of the first frequency domain to the extended frequency domain. The information for indicating power of the reference signals may be configured based on energy per resource element (EPRE).

According to an embodiment, the uplink signal may comprise extending signals configured based on the FDSS. The extending signals may correspond to at least part of the data signals. The extending signals may be transmitted through a third frequency domain distinct from the second frequency domain among the extended frequency domain.

According to an embodiment, the instructions, when executed by the at least one processor individually or collectively, may cause the device to perform a channel estimation for the first frequency domain through the reference signal received through the first frequency domain. The instructions, when executed by the at least one processor individually or collectively, may cause the device to, based on a result of the channel estimation for the first frequency domain, perform the channel estimation for the third frequency domain. The instructions, when executed by the at least one processor individually or collectively, may cause the device to, based on a result of the channel estimation for the third frequency domain, obtain the extending signals.

According to an embodiment, the first frequency domain may comprise the second frequency domain.

According to an embodiment, the instructions, when executed by the at least one processor individually or collectively, may cause the device to obtain, based on receiving channel state information (CSI) from the terminal, the communication quality of the channel.

According to an embodiment, the instructions, when executed by the at least one processor individually or collectively, may cause the device to obtain, based on receiving a sounding reference signal (SRS) from the terminal, the communication quality of the channel.

According to an embodiment, the instructions, when executed by the at least one processor individually or collectively, may cause the device to determine the first frequency domain based on performance of a shaping filter for the uplink signal, configured based on the FDSS and the communication quality of the channel.

According to an embodiment, a method performed by a device of a base station may comprise determining, based on communication quality of a channel between the base station and a terminal, a first frequency domain for reference signals among an extended frequency domain of frequency domain spectrum shaping (FDSS). The method may comprise transmitting resource allocation information related to a second frequency domain for data signals among the extended frequency domain to the terminal. The method may comprise receiving uplink signals configured based on the FDSS and comprising the reference signals and the data signals through the extended frequency domain. The method may comprise performing a channel estimation for the second frequency domain through the reference signal received through the first frequency domain. The method may comprise, based on a result of the channel estimation for the second frequency domain, obtaining the data signals.

According to an embodiment, the method may comprise transmitting information for indicating the first frequency domain and information for indicating power of the reference signals in the first frequency domain to the terminal.

According to an embodiment, the method may comprise transmitting, to the terminal, the information for indicating the first frequency domain and the information for indicating power of the reference signals in the first frequency domain through at least one of a radio resource control (RRC) message, a medium access control (MAC) control element (CE), or a downlink control indicator (DCI).

According to an embodiment, the information for indicating the first frequency domain may indicate a ratio of the first frequency domain to the extended frequency domain. The information for indicating power of the reference signals may be configured based on energy per resource element (EPRE).

According to an embodiment, the uplink signal may comprise extending signals configured based on the FDSS. The extending signals may correspond to at least part of the data signals. The extending signals may be transmitted through a third frequency domain distinct from the second frequency domain among the extended frequency domain.

According to an embodiment, the method may comprise performing a channel estimation for the first frequency domain through the reference signal received through the first frequency domain. The method may comprise, based on a result of the channel estimation for the first frequency domain, performing the channel estimation for the third frequency domain. The method may comprise, based on a result of the channel estimation for the third frequency domain, obtaining the extending signals.

According to an embodiment, the first frequency domain may comprise the second frequency domain.

According to an embodiment, the method may comprise obtaining, based on receiving channel state information (CSI) from the terminal, the communication quality of the channel.

According to an embodiment, the method may comprise obtaining, based on receiving a sounding reference signal (SRS) from the terminal, the communication quality of the channel.

According to an embodiment, a non-transitory computer readable storage medium may store one or more programs. The one or more programs may comprise instructions, which, when executed by a processor of a device of a base station, cause the device to determine, based on communication quality of a channel between the base station and a terminal, a first frequency domain for reference signals among an extended frequency domain of frequency domain spectrum shaping (FDSS). The one or more programs may comprise instructions, which, when executed by the processor, cause the device to transmit resource allocation information related to a second frequency domain for data signals among the extended frequency domain to the terminal. The one or more programs may comprise instructions, which, when executed by the processor, cause the device to receive uplink signals configured based on the FDSS and comprising the reference signals and the data signals through the extended frequency domain. The one or more programs may comprise instructions, which, when executed by the processor, cause the device to perform a channel estimation for the second frequency domain through the reference signal received through the first frequency domain. The one or more programs may comprise instructions, which, when executed by the processor, cause the device to, based on a result of the channel estimation for the second frequency domain, obtain the data signals.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A device of a base station comprising:
a transceiver;
memory including a storage medium storing one or more instructions; and
at least one processor including processing circuitry,
wherein the instructions, when executed by the at least one processor individually or collectively, cause the device to:
determine, based on communication quality of a channel between the base station and a terminal, a first frequency domain for reference signals among an extended frequency domain of frequency domain spectrum shaping (FDSS),
transmit resource allocation information related to a second frequency domain for data signals among the extended frequency domain to the terminal,
receive uplink signals configured based on the FDSS and comprising the reference signals and the data signals through the extended frequency domain,
perform a channel estimation for the second frequency domain through the reference signal received through the first frequency domain, and
based on a result of the channel estimation for the second frequency domain, obtain the data signals.

2. The device of claim 1, wherein the instructions, when executed by the at least one processor individually or collectively, further cause the device to transmit information for indicating the first frequency domain and information for indicating power of the reference signals in the first frequency domain to the terminal.

3. The device of claim 2, wherein the instructions, when executed by the at least one processor individually or collectively, further cause the device to transmit, to the terminal, the information for indicating the first frequency domain and the information for indicating power of the reference signals through at least one of a radio resource control (RRC) message, a medium access control (MAC) control element (CE), or a downlink control indicator (DCI).

4. The device of claim 2, wherein the information for indicating the first frequency domain indicates a ratio of the first frequency domain to the extended frequency domain, and
wherein the information for indicating power of the reference signals is configured based on energy per resource element (EPRE).

5. The device of claim 1, wherein the uplink signal further comprises extending signals configured based on the FDSS,
wherein the extending signals correspond to at least part of the data signals, and
wherein the extending signals are transmitted through a third frequency domain distinct from the second frequency domain among the extended frequency domain.

6. The device of claim 5, wherein the instructions, when executed by the at least one processor individually or collectively, cause the device to, further cause the device to:
perform a channel estimation for the first frequency domain through the reference signal received through the first frequency domain,
based on a result of the channel estimation for the first frequency domain, perform the channel estimation for the third frequency domain, and
based on a result of the channel estimation for the third frequency domain, obtain the extending signals.

7. The device of claim 5, wherein the first frequency domain comprises the second frequency domain.

8. The device of claim 1, wherein the instructions, when executed by the at least one processor individually or collectively, further cause the device to obtain, based on receiving channel state information (CSI) from the terminal, the communication quality of the channel.

9. The device of claim 1, wherein the instructions, when executed by the at least one processor individually or collectively, further cause the device to obtain, based on receiving a sounding reference signal (SRS) from the terminal, the communication quality of the channel.

10. The device of claim 1, wherein the instructions, when executed by the at least one processor individually or collectively, further cause the device to determine the first frequency domain based on performance of a shaping filter for the uplink signal, configured based on the FDSS and the communication quality of the channel.

11. A method performed by a device of a base station, comprising:
determining, based on communication quality of a channel between the base station and a terminal, a first frequency domain for reference signals among an extended frequency domain of frequency domain spectrum shaping (FDSS),
transmitting resource allocation information related to a second frequency domain for data signals among the extended frequency domain to the terminal,
receiving uplink signals configured based on the FDSS and comprising the reference signals and the data signals through the extended frequency domain,
performing a channel estimation for the second frequency domain through the reference signal received through the first frequency domain, and
based on a result of the channel estimation for the second frequency domain, obtaining the data signals.

12. The method of claim 11, wherein the method further comprises transmitting information for indicating the first frequency domain and information for indicating power of the reference signals in the first frequency domain to the terminal.

13. The method of claim 12, wherein the method further comprises transmitting, to the terminal, the information for indicating the first frequency domain and the information for indicating power of the reference signals in the first frequency domain through at least one of a radio resource control (RRC) message, a medium access control (MAC) control element (CE), or a downlink control indicator (DCI).

14. The method of claim 12, wherein the information for indicating the first frequency domain indicates a ratio of the first frequency domain to the extended frequency domain, and
wherein the information for indicating power of the reference signals is configured based on energy per resource element (EPRE).

15. A non-transitory computer readable storage medium storing one or more programs, the one or more programs comprising instructions, which, when executed by a processor of a device of a base station, cause the device to:
determine, based on communication quality of a channel between the base station and a terminal, a first frequency domain for reference signals among an extended frequency domain of frequency domain spectrum shaping (FDSS),
transmit resource allocation information related to a second frequency domain for data signals among the extended frequency domain to the terminal,
receive uplink signals configured based on the FDSS and comprising the reference signals and the data signals through the extended frequency domain,
perform a channel estimation for the second frequency domain through the reference signal received through the first frequency domain, and
based on a result of the channel estimation for the second frequency domain, obtain the data signals.
